# EUROPEAN PATENT SPECIFICATION

(11) **EP 1 303 149 B1**
(45) Date of publication and mention of the grant of the patent: **14.09.2005**
(21) Application number: 01308780.4
(22) Date of filing: 16.10.2001
(51) Int. Cl.: H04Q 3/00

(54) **Data record dissemination system apparatus and method therefor**
System, Vorrichtung und Verfahren zur Verbreitung von Datensätzen
Système, appareil et méthode pour la dissémination d'enregistrement de données

(43) Date of publication of application: 16.04.2003
(73) Proprietor: Agilent Technologies, Inc. (a Delaware corporation), Palo Alto, CA 94303 (US)
(72) Inventor: Milne, Alan Leslie, Edinburgh EH4 2PJ, Scotland (GB); Milne, Andrew Robert James, Edinburgh EH14 1NR, Scotland (GB); Hodgson, Paul, c/o Yakara plc, Edinburgh EH6 6SU, Scotland (GB); Irving, Neil John, Edinburgh EH6 6SU, Scotland (GB); Howie, Neil, Edinburgh EH6 6SU, Scotland (GB)
(74) Representative: Coker, David Graeme

(56) References cited:
- WO-A-01/20920
- WO-A-01/31936
- WO-A-01/72074
- US-B1- 6 249 571

## Description

The present invention relates to, inter alia, a data record dissemination system for facilitating analysis of call record data and/or transaction data records in a switched communications system, for example, of the type having a signalling network operating substantially in accordance with Signalling System No. 7, whether as specified by the CCITT, ANSI, ETSI (for GSM), Bellcore or similar body, such as a network being herein referred to as an SS7 network. The CCITT Signalling System Number 7 is specified in Recommendations Q.700 - Q.716 CCITT Volume VI-Fascicle VI.7, Geneva 1989, ISBN 92-61-03511-6. The present invention also relates to a data record distributor apparatus and a data receipt entity for use in the above system, as well as a method of transmitting data records constructed using messages transmitted in the above mentioned signalling network.

In modem switched telecommunications systems (in particular, modem PSTNs) it has become common practice to provide two related but separate network infrastructures: a bearer or transmission network for carrying end-user voice and data traffic, and a signalling network for controlling the setup and release of bearer channels through the bearer network in accordance with control signals transferred through the signalling network. In practice, such signalling networks comprise high-speed computers interconnected by signalling links; computer programs control the computers to provide a set of operational and signalling functions in accordance with a standardised protocol. One example of such a signalling protocol is the afore-mentioned Signalling System No. 7 (SS7) which is being extensively deployed for control of telephone and other data transmission networks. An SS7 network basically comprises various types of signalling points, namely, Signalling End Points (SEPs), for example an end office or local exchange, and Signalling Transfer Points (STPs) interconnected by signalling links, the SEPs being associated for example with respective Signalling Switching Points (SSPs) of the transmission network, and with Service Control Points (SCPs).

The signalling links described above are used for passing signalling information between nodes in the signalling network. The signalling information is carried by Message Signal Units (MSUs) in data fields, the content of which are used to generate Call Detail Records (CDRs) see e.g. WO 0120920. In addition to information relating to CDRs, MSUs also carry non-circuit related information, for example relating to intelligent network services, between signalling points (network nodes). In this respect, the MSUs carry Transaction Capabilities Application Part (TCAP) messages relating to SSP and SCP queries and responses. In mobile networks, TCAP messages carry the mobile application part (MAP) messages sent between switches and databases to authenticate users, identify equipment, and enable roaming. The TCAP messages relating to an individual transaction can be correlated to form a Transaction Detail Record (TDR).

The above described CDRs and/or TDRs are used by certain client software applications to manage the telecommunications networks, for example, billing applications, anti-fraud applications, Quality of Service applications (QoS), and business intelligence applications. These client software applications requires an input data feed of CDRs/TDRs in order to function. The input data feed of CDRs/TDRs can be supplied from an SS7 CDR/TDR builder application. The client software applications are typically remotely located from, but capable of communicating with, the SS7 CDR/TDR builder application. More specifically, the client software applications sometimes require CDRs and/or TDRs of differing respective content. Consequently, in a worst-case scenario, different client software applications of different software providers generate their own respective CDRs/TDRs. For example, a first software provider provides a billing management client application, a second software provider provides an anti-fraud management application, and a third software provider provides a QoS, or network intelligence, management application. In the worst-case scenario, each of the client applications provided by the first, second and third software providers would each require a separate and independent CDR/TDR creation data system to communicate respectively CDRs/TDRs to the billing, anti-fraud and QoS management applications. A clear disadvantage of such an approach is the duplication of effort in the collection and dissemination of the CRDs/TDRs as well as the prolific number of CDR/TDR collection tasks required.

Additionally, if more than one like client application exists for use with the signalling network, separate CDR/TDR collection tasks would be required necessitating respective CDR/TDR streams. A consequence of the above configuration is network congestion, WAN outage problems, connection re-establishment problems and alarm management problems, as well as a need for additional hardware.

According to a first aspect of the present invention, there is provided a data record dissemination system for interfacing with a signalling network, the system comprising a data record distributor for receiving data records constructed using messages transmitted in the signalling network, characterised by a plurality of data receipt entities capable of receiving data from the data record distributor via a communications network, the data corresponding to at least one of the data records, and the data record distributor being arranged with a number of the plurality of data receipt entities to communicate the at least one data record between the data record distributor and the number of the plurality of data receipt entities as a point-to-multipoint communication.

Preferably, the data corresponding to the at least one of the data records corresponds to a data file comprising a plurality of the data records. More preferably, the system further comprises a plurality of data storage areas, the plurality of data receipt entities being arranged respectively to store, when in use, the data file in at least one of the plurality of data storage areas.

Preferably, the data corresponding to the at least one of the data records corresponds to a data record. More preferably, the system further comprises a plurality of data storage areas, the plurality of data receipt entities being arranged to store, when in use, respectively the at least one data record in at least one of the plurality of data storage areas.

Preferably, the number of the plurality of data receipt entities is a plurality of client entities.

Preferably, the number of the plurality of data receipt entities is a plurality of file transfer enabled entities arranged to receive the data from the data record distributor.

Preferably, at least one of the plurality of file transfer enabled entities is capable of retrieving respectively the data file from one of the plurality of data storage areas. More preferably, the file transfer enabled entities are FTP enabled entities.

Preferably, the data record distributor is capable of transmitting the data record to the plurality of client entities.

Preferably, the data records are of a same variant.

Preferably, the data record is a detail record. More preferably, the detail records comprise at least one Call Detail Record (CDR). Alternatively, the detail records comprise at least one Transaction Detail Record (TDR).

According to a second aspect of the present invention, there is provided a data record distributor apparatus for receiving data records constructed using messages transmitted in a signalling network, characterised by a distribution entity arranged to communicate data with a plurality of data receipt entities via a communications network as a point-to-multipoint communication, the data corresponding to at least one of the data records.

According to a third aspect of the present invention, there is provided a data receipt entity for a data record dissemination system of a signalling system, the apparatus comprising a data receiver arranged to receive data communicated thereto as part of a point-to-multipoint communication, the data corresponding to at least one data record.

According to a fourth aspect of the present invention, there is provided a client application comprising the data receipt entity as set forth in accordance with the third aspect of the present invention.

According to a fifth aspect of the present invention, there is provided a file transfer enabled entity comprising the data receipt entity as set forth in accordance with the third aspect of the present invention. Preferably, the file transfer enabled entity is FTP enabled.

According to a sixth aspect of the present invention, there is provided a method of transmitting data records constructed using messages transmitted in a signalling network to a plurality of data receipt entities capable of receiving data via a communications network, the method being characterised by the steps of: receiving data; establishing a point-to-multipoint communication with a number of the plurality of data receipt entities depending upon the data required by the number of the plurality of data receipt entities so as to communicate the data to the number of the plurality of receipt entities, the data corresponding to at least one of the data records.

According to a seventh aspect of the present invention, there is provided a computer program element comprising computer program code means to make a computer execute the method as set forth in accordance with the fifth aspect of the present invention.

Preferably, the computer program element is embodied on a computer readable medium.

It is thus possible to provide a data record dissemination system, a data record distributor apparatus, a data receipt entity, and a method of transmitting data records requiring fewer data record collection tasks. Additionally, network congestion, WAN outage problems, connection re-establishment problems and alarm management problems are obviated, or at least mitigated. Consequently, less hardware, system monitoring footprint, maintenance are required. Also, easier system integration, systems management, easier/better correlation of data, and lower operation and training costs are possible.

At least one embodiment of the invention will now be described, by way of example only, with reference to the accompanying drawings, in which:
**Figure 1** is a schematic diagram of a signalling network;
**Figure 2** is a schematic diagram of an apparatus, in part, shown in Figure 1;
**Figure 3** is a schematic diagram of a collector task conforming to a first and a second embodiment of the present invention;
**Figure 4** is a schematic diagram of a network configuration conforming to the first embodiment;
**Figure 5** is a schematic diagram of a real time processor task conforming to the first embodiment;
**Figure 6** is a flow diagram of a method conforming to the first embodiment;
**Figure 7** is a schematic diagram of another network configuration conforming to the second embodiment;
**Figure 8** is a schematic diagram of a near-real time processor task conforming to the second embodiment; and
**Figure 9a and 9b** are flow diagrams of other methods conforming to the second embodiment.

Throughout the following description, identical reference numerals will be used to identify like parts.

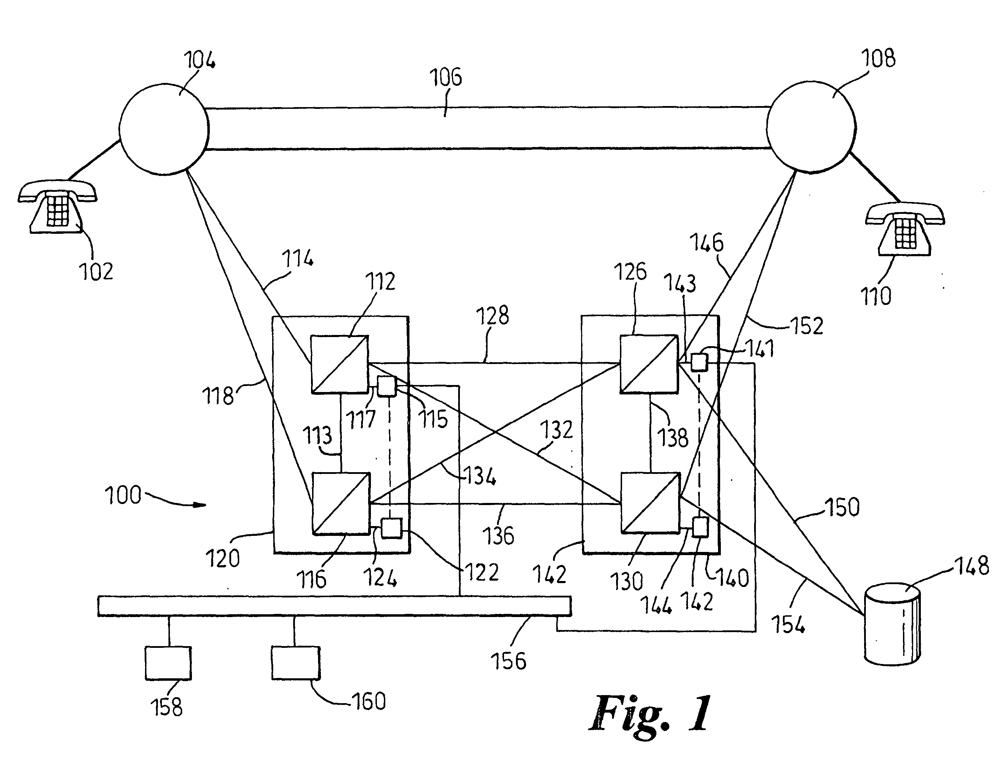

Referring to Figure 1, a signalling network 100 for a communications network, such as a telecommunications network, supports an SS7 signalling protocol and comprises a first network terminating device such as a first telephone handset 102 coupled to a first SSP 104. The first SSP 104 is capable of establishing a trunk connection 106 with a second SSP 108 and vice versa, the second SSP 108 being coupled to a second network terminating device such as a second telephone handset 110.

The first SSP 104 is coupled to a first STP 112 by a first A link 114 and a second STP 116 by a second A link 118. The first STP 112 is coupled to the second STP 116 by a first C link 113 and, together, the first and second STPs 112, 116 constitute a first mated pair of STPs 120. A first Agilent® acceSS7 Nework Monitoring System (NMS) comprises a first primary collector unit 122 and a first secondary collector unit 115. The first primary collector unit 115 is, although not essentially, co-located with the first STP 112 and coupled to first links (not shown) provided by the first STP112 by a first electrical connection 117. Similarly, although not essentially co-located, in this example the first secondary collector unit 122 is co-located with the second STP 116 and coupled to second links (not shown) provided by the second STP 116 by a second electrical connection 124.

The first STP 112 is coupled to a third STP 126 by a first B link 128 and a fourth STP 130 by a second B link 132. The second STP 116 is also coupled to the third STP 126 by a third B link 134 and the fourth STP 130 by a fourth B link 136. The third STP 126 is coupled to the fourth STP130 by a second C link 138 and, together, the third and fourth STPs 126, 130 constitute a second mated pair of STPs 140. A second Agilent® acceSS7 NMS comprises a second primary collector unit 142 and a second secondary collector unit 141. The second primary collector unit 141, although not essentially, is co-located with the third STP 126 and coupled to third links (not shown) provided by the third STP 126 by a third electrical connection 143. Similarly, although not essentially co-located, in this example the second secondary collector unit 142 is co-located with the fourth STP 130 and coupled to fourth links (not shown) provided by the fourth STP 130 by a fourth electrical connection 144.

The third STP 126 is coupled to the second SSP 108 by a third A link 146 and an SCP 148 by a fourth A link 150. The fourth STP 130 is also coupled to the second SSP 108 and the SCP 148, but by a fifth A link 152 and a sixth A link 154, respectively.

The first and second primary collectors 115, 141 are coupled to a Wide Area Network (WAN) 156, a first remote Unix-based server 158 and a second remote Unix-based server 160 also being coupled to the WAN 156.

Software agents are distributed between, in this example, the first and second primary collectors 115, 141 and the first and second remote servers 158, 160. The software agents are provided to disseminate, in this example, CDRs generated at the first and second NMSs to the client applications executing on the first and second remote servers 158, 160. The client applications are software applications respectively used to carry out a number of functions in relation to the communications network.

Each of the client applications fall into one of two categories: applications requiring Detail Records (DRs) as soon as possible, and application requiring DRs stored resiliently in a consistent format for batch processing. Examples of client applications requiring DRs as soon as possible are real-time anti-fraud client applications or immediate action applications, such as for terminating blacklisted telephone numbers. Examples of client applications requiring DRs stored resiliently in a consistent format for batch processing are billing, QoS, and business intelligence applications.

As mentioned above, the software agent is distributed. In this respect, the software agent comprises five task types that are not all co-located: a collector task, a Real Time (RTi) processor task, a Reliable Data Transfer (RDT) processor task, an RDT manager task, and an RDT session task. The structures of the above task types will be described in more detail herein.

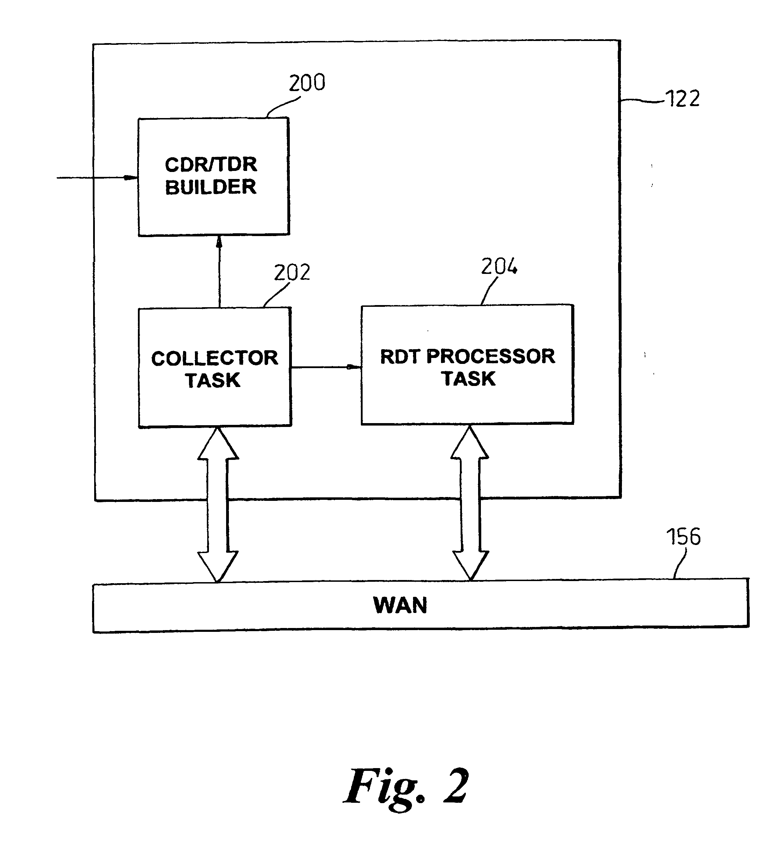

Referring to Figure 2, the first primary collector 115 is a Unix based server supporting a first Detail Record (DR) builder application 200. In this example, the first DR builder application 200 builds CDRs. In addition, the first primary collector 115 supports a first collector task 202 capable of communicating with the first DR builder application 200, and a first RDT processor task 204. The first collector task 202 and the first RDT processor task 204 are independently able to communicate with the first remote server 158 and/or the second remote server 160 via the WAN 156 using Transmission Control Protocol (TCP)/Internet Protocol (IP) sockets and a File Transfer Protocol (FTP), respectively.

The first collector task 202 supports two modes of data transport, namely, Real Time and Near-Real Time. The two categories of client application requirements are therefore supported.

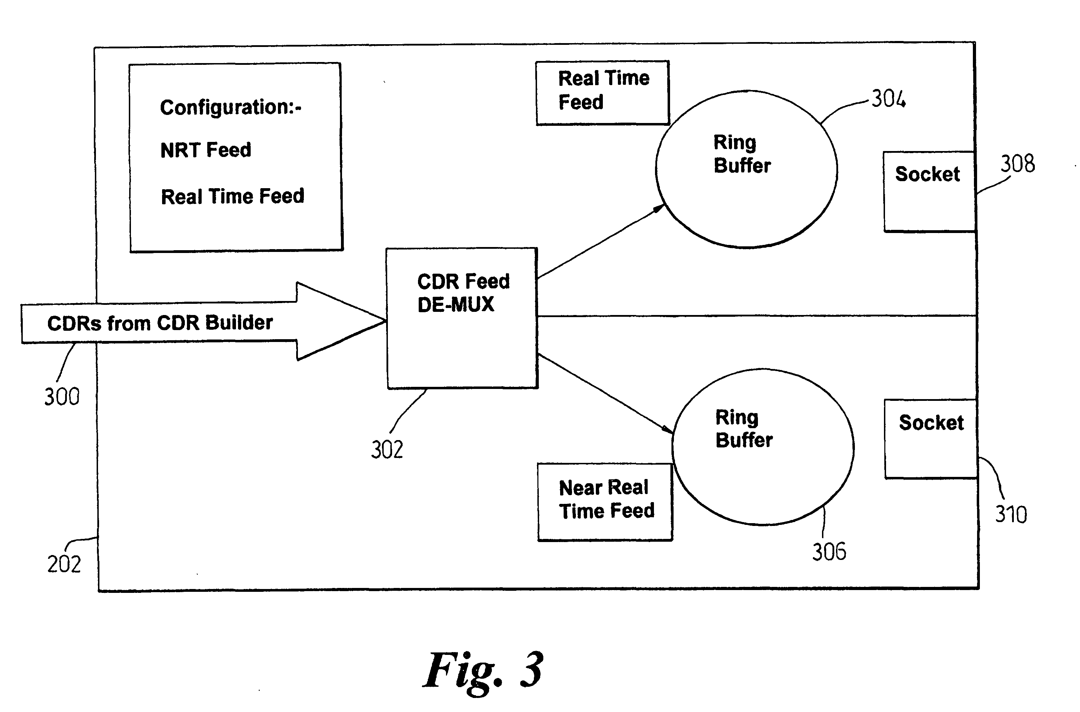

Referring to Figure 3, the first collector task 202 comprises an input 300 for receiving CDRs from the first DR builder application 200. The input 300 is arranged to provide data to a demultiplexer 302, the demultiplexer 302 being capable of distinguishing between CDRs for use by real time applications and CDRs for use by non-real time applications. The CDRs for real time applications are identified by the demultiplexer 302 amongst the received CDRs and stored in a first ring buffer 304. Similarly, the CDRs for non-real time applications are identified by the demultiplexer 302 from amongst the received CDRs and stored in a second ring buffer 306. The first and second ring buffers 304, 306 are circular buffers, each divided into slots and blocks. Each of the first and second ring buffers 304, 306 comprises two pointers (not shown). A first respective pointer points to a position in the ring buffer of a last CDR received and a second respective pointer points to a next block to send. Each slot can contain one CDR. The number of slots per block is configurable. The first collector task 202 also comprises a first TCP/IP socket 308 and a second TCP/IP socket 310. The first and second TCP/IP sockets 308, 310 can be written to by the first ring buffer 304 and the second ring buffer 306, respectively.

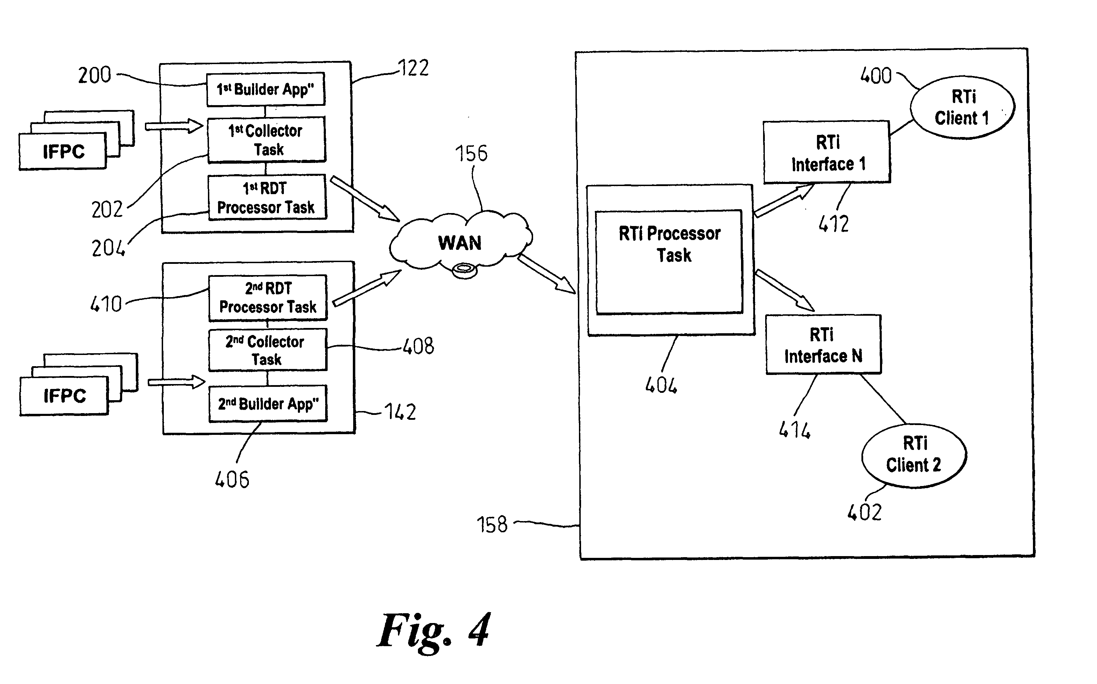

Referring to Figure 4, the second primary collector 141 is a Unix based server that supports a second DR builder application 406, a second collector task 408 and a second RDT processor task 410. The second collector task 408 has a like structure to the first collector task 202 and so will not be described further.

In connection with the Real Time mode, the first remote server 158 supports a first RTi client application 400, a second RTi client application 402 and an RTi processor task 404. The first TCP/IP socket 308 of the first and second collector tasks 202, 408 provides access to the first RTi client application 400 and/or the second RTi client application 402 via the RTi processor task 404.

The first collector task 202 (as mentioned above) and the second collector task 408 can communicate with the remote central server 158 via the WAN 156. A listening port (not presently shown) of the first RTi processor task 404 establishes a TCP connection that provides a first RTi interface 412 and second RTi interface 414 through which the first RTi client application 400 and the second RTi client application 402 can communicate with the RTi processor task 404. The RTi processor task 404 acts as a server to provide CDRs to the first RTi client application 400 via the first RTi interface 412, and to the second RTi client application 402 via the second RTi interface 414 using TCP/IP, more particularly in this example TCP/IP sockets.

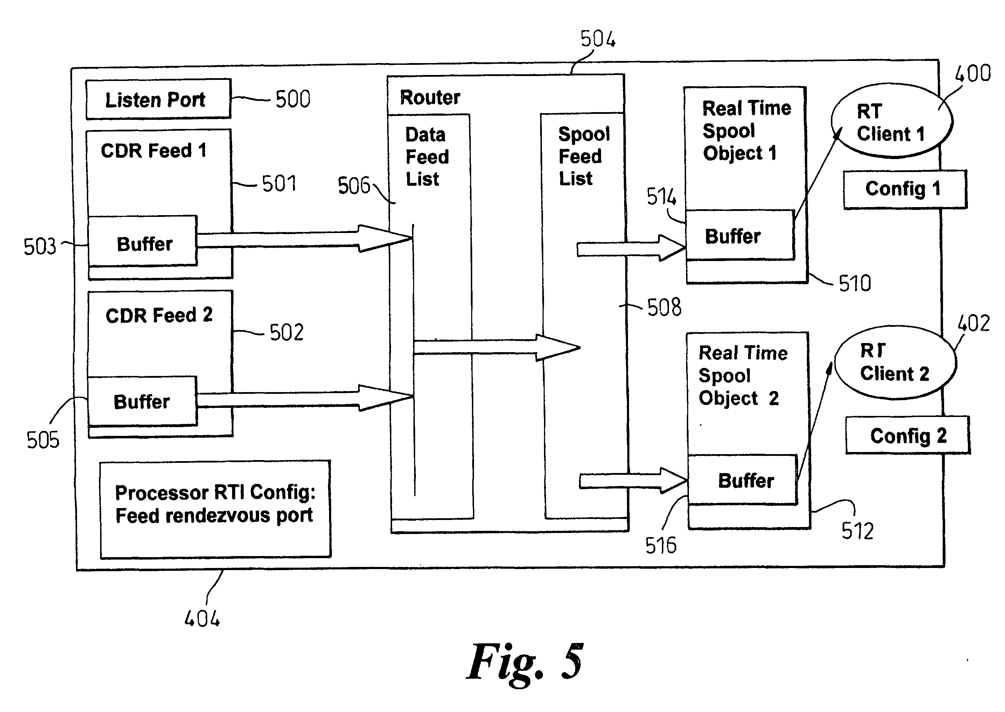

Referring to Figure 5, the RTi processor task 404 comprises a first listening port 500, a first RTi CDR feed object 501 for receiving a first feed of CDRs in real time, and a second RTi CDR feed object 502 for receiving a second feed of CDRs in real time, the first and second RTi CDR feed objects 501, 502 having a first feed buffer 503 and a second feed buffer 505, respectively; the first and second feed buffers 503, 505 are in communication with a first router object 504. The first router object 504 maintains a data feed list 506 and a spool feed list 508, the first router object 504 being capable of communicating data to a first RTi spool object 510 and a second RTi spool object 512. The first RTi spool object 510 comprises a first spool buffer 514 and the second RTi spool object 512 comprises a second spool buffer 516. The first RTi spool object 510 is associated with, and can forward data to, the first RTi client application 400, and the second spool object 512 is associated with, and can forward data to, the second RTi client application 402.

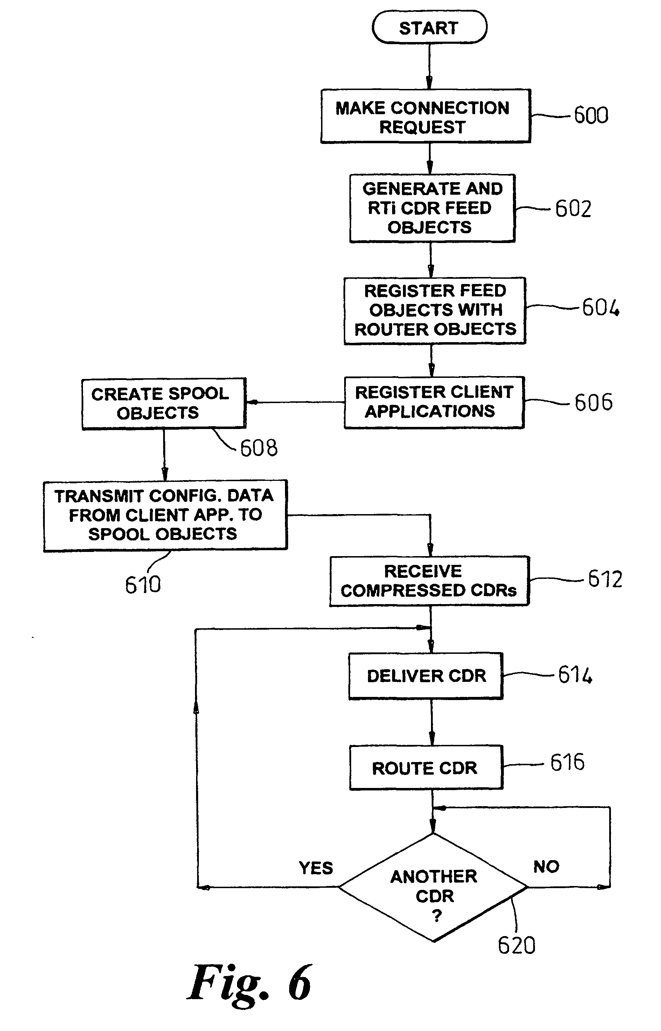

In operation (Figure 6) in the real time mode, the first and second collector tasks 202, 408 each make a connection request (Step 600) to the first listening port 500. The connection request results in the RTi processor task 404 generating (Step 602) the first RTi CDR feed object 501 and the second RTi CDR feed object 502, the first and second RTi CDR feed objects 501, 502 being registered (Step 604) with the first router object 504 by way of respective entries in the data feed list 506. Subsequently, the first and second client applications 400, 402 respectively register (Step 606) with the first RTi processor task 404. After registration of the first client application 400 with the first RTi processor task 404, the first RTi spool object 510 is created (Step 608) and the first client application 400 transmits (Step 610) first configuration data (not shown) to the first RTi spool object 510. The first configuration data comprises a first indication of data types and buffer size required by the first client application 400. Similarly, during registration of the second client application 402 with the second RTi processor task 410, the second RTi spool object 512 is created (Step 608) and the second client application 402 transmits (Step 610) second configuration data (not shown) to the second RTi spool object 512, the second configuration file comprising a second indication of data types and buffer size required by the second client application 402.

In this example, the first indication of data types is a first Class ID and a first Variant ID combination. Similarly, in this example, the second indication of data types is a second Class ID and a second Variant ID combination. The Class ID of a DR is a filter criteria relating to a certain field of the DR (a number of different Class IDs can therefore exist), for example in the field of CDRs, call type, call direction, number group IDs, sample factors, class indicators, call-in-progress selection, repeating call-in-progress selection. The Variant ID of a DR corresponds to a predetermined set of data fields contained in the DR which, together, define the DR. A number of Variants and, hence Variant IDs, can therefore exist for DRs.

Once the first and second CDR feeds have been established, the first and second collector tasks 202, 408 receive (Step 612) compressed CDRs from the first and second DR builder applications 200, 406, the compressed CDRs being delivered (Step 614) from the first and second collector tasks 202, 408 respectively to the first RTi CDR feed object 501 and the second RTi CDR feed object 502. Upon receipt of a compressed CDR, the first router object 504 routes (Step 616), using information registered in the spool feed list 508 and in a header of the received compressed CDR, the received CDR to the first RTi spool object 510 and/or the second RTi spool object 512 depending upon Class IDs and the Variant IDs of CDRs required by the first and second RTi client applications 400, 402. If the received CDR is to be routed to both the first and second RTi spool objects 510, 512 for onward communication to the first and second RTi client applications 400, 402, the received CDR is multicast to the first and second RTi spool objects 510, 512. The above transmission process is repeated (Steps 614, 616, 618) for subsequently received CDRs.

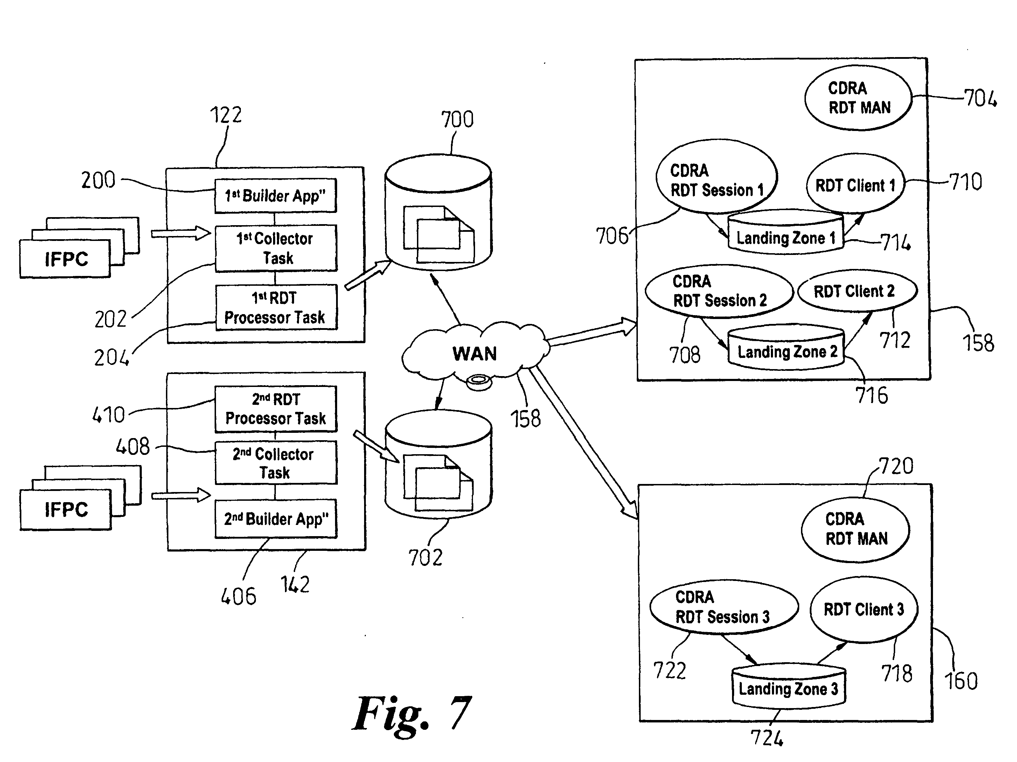

In another embodiment (Figure 7), constituting the near-real time mode, the first primary collector 115 comprises a first spool area 700 and the second primary collector 141 comprises a second spool area 702 for storage of DRs as batch files by the first and second RDT processor tasks 204, 410, respectively.

In addition to the first RDT processor task 204 supported by the first primary collector 115 and the second RDT processor task 408 supported by the second primary collector 141 mentioned above, the first remote server 158 supports a first RDT manager task 704, a first RDT session task 706, and a second RDT session task 708. Additionally, the first remote server 158 is supporting a first RDT client application 710 and a second RDT client application 712. The first RDT session task 706 is capable of storing DRs at a first landing zone 714, the first landing zone 714 being a directory on the first remote server 158. Similarly, the second RDT session task 708 is capable of storing DRs at a second landing zone 716, namely in this example a second directory on the first remote server 158. The first RDT client application 710 is capable of accessing the first landing zone 714 and the second RDT client application 712 is capable of accessing the second landing zone 716. In another embodiment, the first and/or second RDT client applications 710, 712 can access both the first and second landing zones 714, 716.

In this example, the second remote server 160 supports a third client RDT application 718 requiring CDR batch files. Consequently, the second remote server 160 supports a second RDT manager task 720 and a third RDT session task 722. The third RDT session task 722 is capable of storing DRs at a third landing zone 724, the third landing zone 724 being a third directory on the second remote server 160. The third RDT client application 718 is capable of accessing the third landing zone 724.

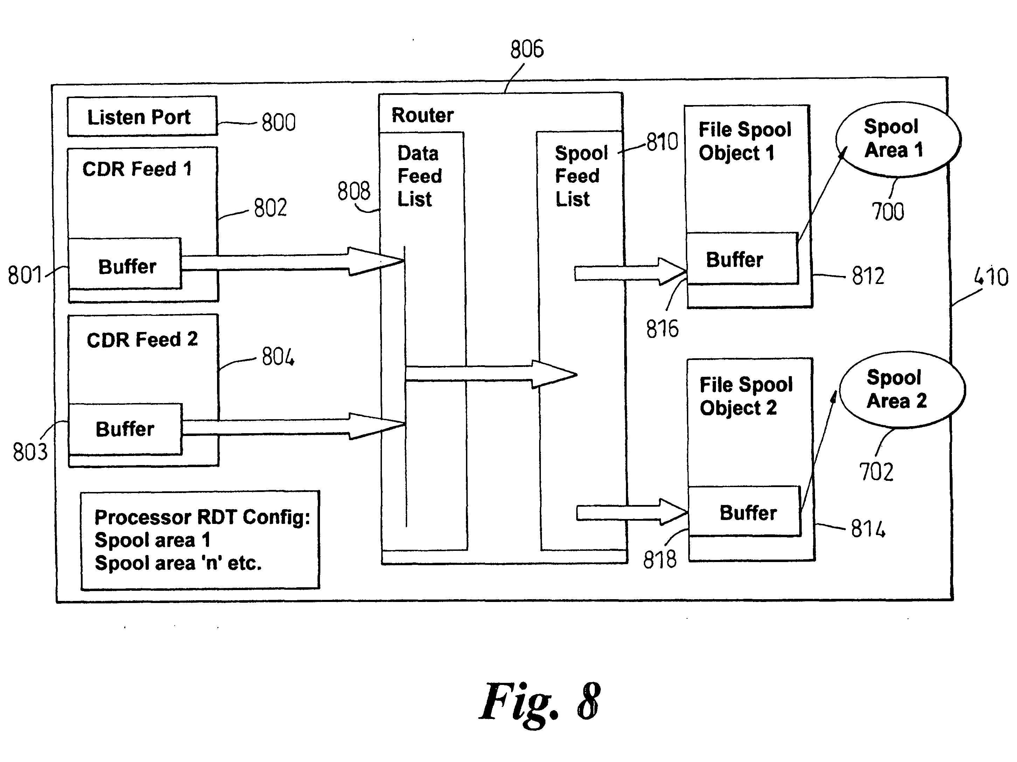

Referring to Figure 8, each of the first and second RDT processor tasks 204, 410 comprise a second router object 806, a second listening port 800, a first CDR feed object 802 for receiving compressed CDRs from the first collector task 202. A second CDR feed object 804 can, optionally, be provided for receiving compressed CDRs from another collector task (not shown) should the first and/or second RDT processor tasks 204, 410 be respectively resident on the first and/or second remote servers 158,160. The first CDR feed object 802 comprises a first feed buffer 801 and a second feed buffer 803, respectively, the first and second feed buffers 801, 803 being in communication with the second router object 806. The second router object 806 maintains a data feed list 808 and a spool feed list 810, the second router object 806 being capable of routing data to a first file spool object 812 and a second file spool object 814. The first file spool object 812 comprises a first spool buffer 816 and the second file spool object 814 comprises a second spool buffer 818. The first spool buffer 816 is associated with, and can forward data to, the first spool area 700, and the second spool buffer 818 is associated with, and can forward data to, the second spool area 702.

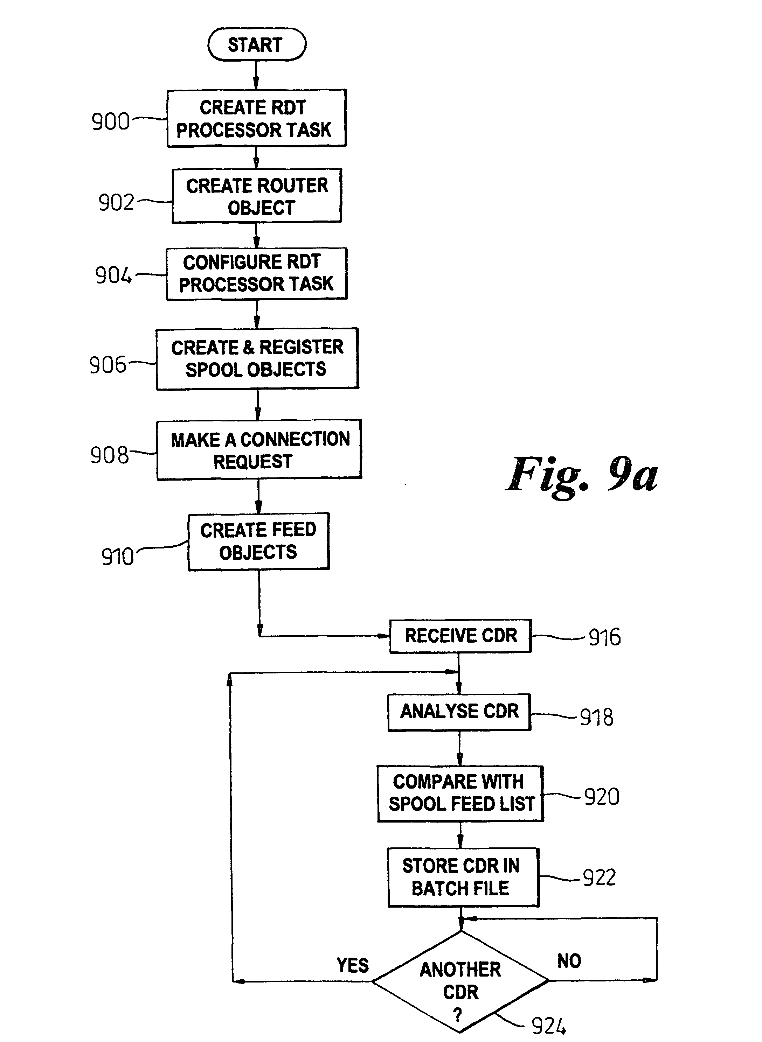

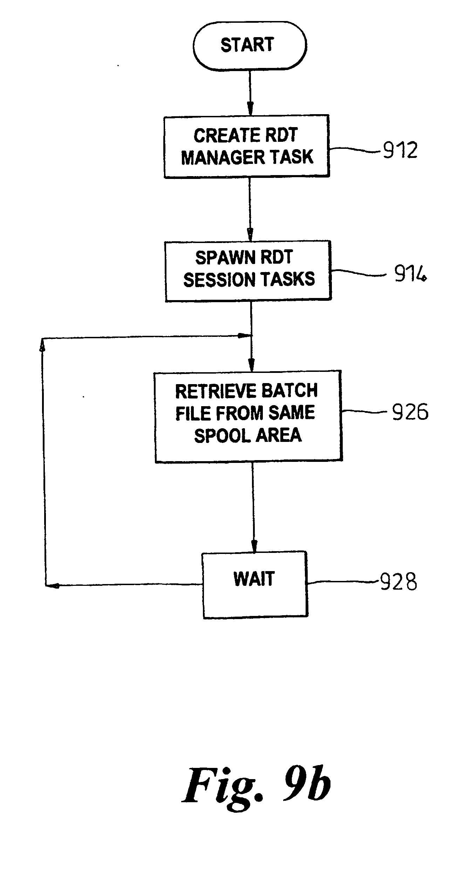

In operation (Figure 9) in the near-real time mode, the first and second RDT processor tasks 204, 410 are created (Step 900) and initialised. Initialisation of the first and second RDT processor tasks 204, 410 is identical in this example and so initialisation of the first RDT processor task 204 will only be described hereinafter.

The second router object 806 is created (Step 902) and a first pre-prepared configuration file (not shown) is used to configure (Step 904) the first RDT processor task 204. In particular, the first pre-prepared configuration file comprises data concerning the location of spool areas, the spool areas being storage locations, in this example on a hard disc drive, for storing DRs. In addition, the restrictions on the DR types that can be stored in the spool areas, for example Class ID and Variant ID, are also stored in the first pre-prepared configuration file. In response to the data concerning the location of spool areas, the first RDT processor task 204 creates (Step 906) a spool object for each spool area specified in the pre-prepared configuration file. In this example, two spool areas are specified, namely the first and second spool areas 700, 702. Upon creation of the first and second file spool objects 812, 814, the first and second file spool objects 812, 814 register (Step 906) with the second router object 806 and the identify of the first and second file spool objects 812, 814 are respectively recorded in the spool feed list 810. Once the first and second file spool objects 812, 814 have registered with the second router object 806, the first RDT processor task 204 awaits connection requests from the first collector task 202 via the second listening port 800. Upon receipt of a connection request (Step 908) from the first collector task 202, the first RDT processor task 204 creates (Step 910) the first CDR feed object 802 for receiving compressed CDRs from the first collector task 202. The second router object 806 records the identity of the first CDR feed object 802 in the data feed list 808.

Independently of the first and second RDT processor tasks 204, 410 being initialised, the first RDT manager task 704 is created (Step 912) and uses a first session configuration file to spawn (Step 914) RDT session tasks. The first session configuration file comprises, inter alia, a list of the spool area and landing zone mapping, details of the spool areas being provided by the first and second RDT processor tasks 204, 410. The first RDT manager task 704 creates an RDT session task for each spool area/landing zone mapping listed in the session configuration file. Consequently, the first RDT manager task 704 spawns the first RDT session task 706 for a first spool area/first landing zone mapping and the second RDT session task 708 for a second spool area/second landing zone mapping. Once started, each of the first and second RDT session tasks 706, 708 starts a respective FTP client co-process for performing file transfers. The first RDT session task 204 also immediately thereafter registers its interest in the first spool area 700 and the second RDT session task 708 registers its interest in the second spool area 702, by adding their respective details to a first and a second registration directory respectively held on the first and second primary collectors 115, 141.

Once set-up, the first RDT session task 706 is provided with the location of the first landing zone 714 from the first session configuration file. Likewise, the second RDT session task 708 is provided with the location of the second landing zone 716. The first session configuration file contains the locations of the first and second landing zones 714, 716 based upon known configured operation information concerning the locations from which the first and second RDT client applications 710, 712 retrieve CDRs.

In a similar manner, the second RDT manager task 720 is created and the third RDT session task 722 is spawned and set-up in respect of a first spool area/third landing zone mapping. Consequently, in this example, the third RDT session task 722 registers its interest in the first spool area 700.

CDRs generated by the first DR builder application 200 and collected by the first collector task 202 are stored in the second ring buffer 310 prior to communication to the first RDT processor task 204. Upon receipt (Step 916) of a compressed CDR at the first CDR feed object 802, the received CDR is passed to the second router object 806 which then analyses (Step 918) the Class ID and Variant ID of the received CDR from the header of the received compressed CDR and analyses (Step 920) the spool feed list 810 in order to identify one or more spool area corresponding to the Class ID and Variant ID of the received CDR. Consequently, all CDRs having like Class IDs and Variant IDs are stored together. Once an appropriate spool area is identified, the received CDR is stored (Step 922) in the appropriate spool area, for example, the first spool areas 820 by the first file spool object 812. The process of receiving, analysing and storing received CDRs in appropriate spool area is repeated (Steps 916, 918, 920, 922, 924) as often as required. The CDRs are stored as respective batch files, in this example, in the first and second spool area 700, 702.

At predetermined time intervals (Step 928), the first, second and third RDT session tasks 706, 708, 722 respectively retrieve (Step 926) the batch files stored in the first and second spool areas 700, 702, using the FTP, of the first and second RDT processor tasks 204, 410. The retrieved batch files are respectively stored in the first, second and third landing zones 714, 716, 724 for subsequent respective retrieval by the first, second and third RDT client applications 710, 712, 718. The retrieval (Step 926) of the content of the first spool area 700 of the first RDT processor application 204, in this example, by the first and third RDT session tasks 706, 722 constitutes a point-to-multiple points communication, the communication effectively being a multicast from the first spool areas 700.

It should be appreciated that, although specific reference has been made to CDRs, the examples disclosed herein are equally applicable to the dissemination of other Detail Records, for example Transaction Detail Records (TDRs). Additionally, it should be understood that, in their respective embodiments, the RTi processor task 404 and the RDT processor tasks 204, 410 effectively distribute data records, and the RTi clients 400, 402 and the RDT session tasks 706, 708, 722 are entities that receive data.

Although the above examples have been described in the context of the SS7 protocol, it should be appreciated that the present invention is not limited to this particular protocol and is applicable to other compatible signalling protocols.

Alternative embodiments of the invention can be implemented as a computer program product for use with a computer system, the computer program product being, for example, a series of computer instructions stored on a tangible data recording medium, such as a diskette, CD-ROM, ROM, or fixed disk, or embodied in a computer data signal, the signal being transmitted over a tangible medium or a wireless medium, for example microwave or infrared. The series of computer instructions can constitute all or part of the functionality described above, and can also be stored in any memory device, volatile or nonvolatile, such as semiconductor, magnetic, optical or other memory device.

## Claims

1. A data record dissemination system for interfacing with a signalling network (100), the system comprising a data record distributor (404) for receiving data records constructed using messages transmitted in the signalling network (100), **characterised by** a plurality of data receipt entities (400, 402, 706, 708, 722) capable of receiving data from the data record distributor (404) via a communications network (158), the data corresponding to at least one of the data records, and the data record distributor (404) being arranged with a number of the plurality of data receipt entities (400, 402, 706, 708, 722) to communicate the at least one data record between the data record distributor (404) and the number of the plurality of data receipt entities (400, 402, 706, 708, 722) as a point-to-multipoint communication.

2. A system as claimed in Claim 1, wherein the data corresponding to the at least one of the data records corresponds to a data file comprising a plurality of the data records.

3. A system as claimed in Claim 1, wherein the data corresponding to the at least one of the data records corresponds to a data record.

4. A system as claimed in Claim 2, further comprising a plurality of data storage areas (820, 822), the plurality of data receipt entities (400, 402, 706, 708, 722) being arranged respectively to store, when in use, the data file in at least one of the plurality of data storage areas (820, 822).

5. A system as claimed in Claim 3, further comprising a plurality of data storage areas (514, 516), the plurality of data receipt entities (400, 402, 706, 708, 722) being arranged to store, when in use, respectively the at least one data record in at least one of the plurality of data storage areas (514. 516).

6. A system as claimed in any one of the preceding claims, wherein the number of the plurality of data receipt entities (400, 402, 706, 708, 722) is a plurality of client entities (400, 402).

7. A system as claimed in any one of the preceding claims, wherein the number of the plurality of data receipt entities (400, 402, 706, 708, 722) is a plurality of file transfer enabled entities (706, 708, 722) arranged to receive the data from the data record distributor (204, 404).

8. A system as claimed in Claim 7, when dependent upon Claim 4, wherein at least one of the plurality of file transfer enabled entities (706, 608, 722) is capable of retrieving respectively the data file from one of the plurality of data storage areas (820, 822).

9. A system as claimed in Claim 6, when dependent upon Claim 5, wherein the data record distributor (204, 404) is capable of transmitting the data record to the plurality of client entities (400, 402).

10. A system as claimed in any one of the preceding claims, wherein the data records are of a same variant.

11. A system as claimed in any one of the preceding claims, wherein the data record is a detail record.

12. A system as claimed in Claim 9, wherein the detail records comprise at least one Call Detail Record (CDR).

13. A data record distributor apparatus for receiving data records constructed using messages transmitted in a signalling network (100), **characterised by** a distribution entity (404) arranged to communicate data with a plurality of data receipt entities (400, 402, 706, 708, 722) via a communications network (158) as a point-to-multipoint communication, the data corresponding to at least one of the data records.

14. A method of transmitting data records constructed using messages transmitted in a signalling network (100) to a plurality of data receipt entities (400, 402, 706, 708, 722) capable of receiving data via a communications network (158), the method being **characterised by** the steps of:
receiving (610, 912) data;
establishing a point-to-multipoint communication (614, 920) with a number of the plurality of data receipt entities (400, 402, 706, 708, 722) depending upon the data required by the number of the plurality of data receipt entities so as to communicate the data to the number of the plurality of receipt entities (400, 402, 706, 708, 722), the data corresponding to at least one of the data records.

15. A computer program element comprising computer program code means to make a computer execute the method as claimed in Claim 14.

16. A computer program element as claimed in Claim 15, embodied on a computer readable medium.

## Patentansprüche

1. Ein Datenaufzeichnungsverbreitungssystem zum Bilden einer Schnittstelle mit einem Signalisierungsnetzwerk (100), wobei das System einen Datenaufzeichnungsverteiler (404) zum Empfangen von Datenaufzeichnungen aufweist, die unter Verwendung von Nachrichten hergestellt sind, die in dem Signalisierungsnetzwerk (100) übertragen werden, **gekennzeichnet durch** eine Mehrzahl von Datenempfangsentitäten (400, 402, 706, 708, 722), die in der Lage sind, über ein Kommunikationsnetzwerk (158) Daten von dem Datenaufzeichnungsverteiler (404) zu empfangen, wobei die Daten zumindest einer der Datenaufzeichnungen entsprechen, und wobei der Datenaufzeichnungsverteiler (404) mit einer Anzahl der Mehrzahl von Datenempfangsentitäten (400, 402, 706, 708, 722) eingerichtet ist, um die zumindest eine Datenaufzeichnung zwischen dem Datenaufzeichnungsverteiler (404) und der Anzahl der Mehrzahl von Datenempfangsentitäten (400, 402, 706, 708, 722) als eine Punkt-zu-Mehrpunkt-Kommunikation zu übermitteln.

2. Ein System gemäß Anspruch 1, bei dem die Daten, die der zumindest einen der Datenaufzeichnungen entsprechen, einer Datendatei entsprechen, die eine Mehrzahl der Datenaufzeichnungen aufweist.

3. Ein System gemäß Anspruch 1, bei dem die Daten, die der zumindest einen der Datenaufzeichnungen entsprechen, einer Datenaufzeichnung entsprechen.

4. Ein System gemäß Anspruch 2, das ferner eine Mehrzahl von Datenspeicherbereichen (820, 822) aufweist, wobei die Mehrzahl von Datenempfangsentitäten (400, 402, 706, 708, 722) jeweils eingerichtet sind, um, wenn dieselben verwendet werden, die Datendatei in zumindest einem der Mehrzahl von Datenspeicherbereichen (820, 822) zu speichern.

5. Ein System gemäß Anspruch 3, das ferner eine Mehrzahl von Datenspeicherbereichen (514, 516) aufweist, wobei die Mehrzahl von Datenempfangsentitäten (400, 402, 706, 708, 722) eingerichtet sind, um, wenn dieselben verwendet werden, jeweils die zumindest eine Datenaufzeichnung in zumindest einem der Mehrzahl von Datenspeicherbereichen (514, 516) zu speichern.

6. Ein System gemäß einem der vorhergehenden Ansprüche, bei dem die Anzahl der Mehrzahl von Datenempfangsentitäten (400, 402, 706, 708, 722) eine Mehrzahl von Client-Entitäten (400, 402) ist.

7. Ein System gemäß einem der vorhergehenden Ansprüche, bei dem die Anzahl der Mehrzahl von Datenempfangsentitäten (400, 402, 706, 708, 722) eine Mehrzahl von zur Datenübertragung befähigten Entitäten (706, 708, 722) ist, die eingerichtet sind, um die Daten von dem Datenaufzeichnungsverteiler (204, 404) zu empfangen.

8. Ein System gemäß Anspruch 7 in Rückbezug auf Anspruch 4, bei dem zumindest eine der Mehrzahl von zur Datenübertragung befähigten Entitäten (706, 708, 722) in der Lage ist, jeweils die Datendatei aus einem der Mehrzahl von Datenspeicherbereichen (820, 822) wiederzugewinnen.

9. Ein System gemäß Anspruch 6 in Rückbezug auf Anspruch 5, bei dem der Datenaufzeichnungsverteiler (204, 404) in der Lage ist, die Datenaufzeichnung an die Mehrzahl von Client-Entitäten (400, 402) zu übertragen.

10. Ein System gemäß einem der vorhergehenden Ansprüche, bei dem die Datenaufzeichnungen von einer gleichen Variante sind.

11. Ein System gemäß einem der vorhergehenden Ansprüche, bei dem die Datenaufzeichnung eine Detailaufzeichnung ist.

12. Ein System gemäß Anspruch 9, bei dem die Detailaufzeichnungen zumindest eine Rufdetailaufzeichnung (CDR) aufweisen.

13. Eine Datenaufzeichnungsverteilervorrichtung zum Empfangen von Datenaufzeichnungen, die unter Verwendung von Nachrichten hergestellt sind, die in einem Signalisierungsnetzwerk (100) übertragen werden, **gekennzeichnet durch** eine Verteilungsentität (404), die eingerichtet ist, um Daten mit einer Mehrzahl von Datenempfangsentitäten (400, 402, 706, 708, 722) über ein Kommunikationsnetzwerk (158) als eine Punkt-zu-Mehrpunkt-Kommunikation zu übermitteln, wobei die Daten zumindest einer der Datenaufzeichnungen entsprechen.

14. Ein Verfahren zum Übertragen von Datenaufzeichnungen, die unter Verwendung von Nachrichten hergestellt sind, die in einem Signalisierungsnetzwerk (100) übertragen werden, an eine Mehrzahl von Datenempfangsentitäten (400, 402, 706, 708, 722), die in der Lage sind, Daten über ein Kommunikationsnetzwerk (158) zu empfangen, wobei das Verfahren durch folgende Schritte **gekennzeichnet** ist:
Empfangen (610, 912) von Daten;
Einrichten einer Punkt-zu-Mehrpunkt-Kommunikation (614, 920) mit einer Anzahl der Mehrzahl von Datenempfangsentitäten (400, 402, 706, 708, 722), abhängig von den Daten, die durch die Anzahl der Mehrzahl von Datenempfangsentitäten benötigt werden, um die Daten an die Anzahl der Mehrzahl von Empfangsentitäten (400, 402, 706, 708, 722) zu übermitteln, wobei die Daten zumindest einer der Datenaufzeichnungen entsprechen.

15. Ein Computerprogrammelement, das eine Computerprogrammcodeeinrichtung aufweist, um einen Computer das Verfahren gemäß Anspruch 14 ausführen zu lassen.

16. Ein Computerprogrammelement gemäß Anspruch 15, das auf einem computerlesbaren Medium ausgeführt ist.

## Revendications

1. Système de diffusion d'enregistrement de données pour assurer une interface avec un réseau de signalisation (100), le système comprenant un répartiteur d'enregistrement de données (404) pour recevoir des enregistrements de données construits en utilisant des messages transmis dans le réseau de signalisation (100), **caractérisé par** une pluralité d'entités de réception de données (400, 402, 706, 708, 722) capables de recevoir des données depuis un répartiteur d'enregistrement de données (404) via un réseau de communication (158), les données correspondant à au moins l'un des enregistrements de données, et le répartiteur d'enregistrement de données (404) étant agencé avec un certain nombre de la pluralité d'entités de réception de données (400, 402, 706, 708, 722) pour communiquer le au moins un enregistrement de données entre le répartiteur d'enregistrement de données (404) et le nombre de la pluralité d'entités de réception de données (400, 402, 706, 708, 722) comme une communication point-multipoint.

2. Système selon la revendication 1, dans lequel les données correspondant à au moins l'un des enregistrements de données correspondent à un fichier de données comprenant une pluralité d'enregistrements de données.

3. Système selon la revendication 1, dans lequel les données correspondant à au moins l'un des enregistrements de données correspondent à un enregistrement de données.

4. Système selon la revendication 2, comprenant en outre une pluralité de zones de stockage de données (820, 822), la pluralité d'entités de réception de données (400, 402, 706, 708, 722) étant agencée respectivement pour stocker, en utilisation, le fichier de données dans au moins l'une de la pluralité de zones de stockage de données (820, 822).

5. Système selon la revendication 3, comprenant en outre une pluralité de zones de stockage de données (514, 516), la pluralité d'entités de réception de données (400, 402, 706, 708, 722) étant agencée pour stocker, en utilisation, respectivement le au moins un enregistrement de données dans au moins une de la pluralité de zones de stockage de données (514, 516).

6. Système selon l'une quelconque des revendications précédentes, dans lequel le nombre de la pluralité d'entités de réception de données (400, 402, 706, 708, 722) est une pluralité d'entités client (400, 402).

7. Système selon l'une quelconque des revendications précédentes, dans lequel le nombre de la pluralité d'entités de réception de données (400, 402, 706, 708, 722) est une pluralité d'entités à transfert de fichier activé (706, 708, 722) agencées pour recevoir les données provenant du répartiteur d'enregistrement de données (204, 404).

8. Système selon la revendication 7, dépendamment de la revendication 4, dans lequel au moins une de la pluralité d'entités à transfert de fichier activé (706, 608, 722) est capable d'extraire respectivement le fichier de données de l'une de la pluralité de zones de stockage de données (820, 822).

9. Système selon la revendication 6, dépendamment de la revendication 5, dans lequel le répartiteur d'enregistrement de données (204, 404) est capable de transmettre l'enregistrement de données à la pluralité d'entités client (400, 402).

10. Système selon l'une quelconque des revendications précédentes, dans lequel les enregistrements de données sont d'une même variante.

11. Système selon l'une quelconque des revendications précédentes, dans lequel l'enregistrement de données est un enregistrement détaillé.

12. Système selon la revendication 9, dans lequel les enregistrements détaillés comprennent au moins un enregistrement détaillé des appels (CDR).

13. Appareil de répartition d'enregistrement de données pour recevoir des enregistrements de données construits en utilisant des messages transmis dans un réseau de signalisation (100), **caractérisé par** une entité de répartition (404) agencée pour communiquer des données avec une pluralité d'entités de réception de données (400, 402, 706, 708, 722) via un réseau de communication (158) comme une communication point-multipoint, les données correspondant à au moins l'un des enregistrements de données.

14. Procédé de transmission d'enregistrements de données construits en utilisant des messages transmis dans un réseau de signalisation (100) vers une pluralité d'entités de réception de données (400, 402, 706, 708, 722) capables de recevoir des données de réception via un réseau de communication (158), le procédé étant **caractérisé par** les étapes consistant à :
recevoir (610, 912) des données ;
établir une communication point-multipoint (614, 920) avec un certain nombre de la pluralité d'entités de réception de données (400, 402, 706, 708, 722) en fonction des données requises par le nombre de la pluralité d'entités de réception de données de façon à communiquer les données au nombre de la pluralité d'entités de réception (400, 402, 706, 708, 722), les données correspondant à au moins l'un des enregistrements de données.

15. Elément de programme informatique comprenant un moyen de code de programme informatique pour qu'un ordinateur exécute le procédé selon la revendication 14.

16. Elément de programme informatique selon la revendication 15, placé sur un support lisible par ordinateur.
